Europäisches Patentamt

European Patent Office

Office européen des brevets

(19)

(11) Publication number: **0 506 470 B1**

# EUROPEAN PATENT SPECIFICATION

(45) Date of publication of patent specification: **30.08.95** (51) Int. Cl.⁶: **C09D 5/14**

(21) Application number: **92302732.0**

(22) Date of filing: **27.03.92**

(54) **Aquatic organism blocking material.**

(30) Priority: **27.03.91 JP 133783/91**
       **22.04.91 JP 182116/91**
       **06.09.91 JP 305749/91**
       **06.09.91 JP 305750/91**
       **06.09.91 JP 305751/91**
       **06.09.91 JP 305753/91**

(43) Date of publication of application:
       **30.09.92 Bulletin 92/40**

(45) Publication of the grant of the patent:
       **30.08.95 Bulletin 95/35**

(84) Designated Contracting States:
       **AT BE CH DE DK ES FR GB GR IT LI LU MC NL PT SE**

(56) References cited:
       **WO-A-88/01284**
       **GB-A- 982 587**
       **US-A- 2 583 545**
       **US-A- 4 196 064**

       **DATABASE WPIL, accession no. 84-174073 [28], Derwent Publications Ltd, London, GB; & JP-A-59 096 238 (MITSUBISHI HEAVY IND.) 02-06-1984**

(73) Proprietor: **SUZUKI SOGYO Co., Ltd.**
       **789 Miyakami**
       **Shimizu-shi,**
       **Shizuoka 424 (JP)**

(72) Inventor: **Nakanishi, Motoyasu**
       **No. 1461-47 Tenma**
       **Fuji-shi,**
       **Shizuoka-ken (JP)**

(74) Representative: **Holmes, Michael John**
       **Frank B. Dehn & Co.**
       **Imperial House**
       **15-19 Kingsway**
       **London WC2B 6UZ (GB)**

**Description**

This invention relates to an aquatic organism blocking material, and more particularly to a material for preventing aquatic organisms from attaching or adhering to a ship bottom, port facilities, or fishing facilities or implements such as a fishing net, a longline, a fish preserve or the like.

Facilities exposed to seawater such as ships, port facilities, fishing facilities and implements including a fishing net and a fish preserve, and the like have readily attached or adhered thereto aquatic organisms such as barnacles, mussels and the like, resulting in deterioration in performance, function, endurance and the like. As a typical approach to the problem, it has been conventionally carried out that an aquatic organism blocking paint such as a bottom paint or the like is applied to the facilities or implements to block adhesion of aquatic organisms thereto or prevent the organisms from attaching or adhering thereto.

Unfortunately, this approach fails to satisfactorily exhibit a desired aquatic organism blocking function or action. Also, the conventional blocking paint used for this purpose typically contains a tin compound, which is dissolved and diffused in seawater, leading to pollution of the sea and marine organisms.

The present invention has been made in view of the foregoing disadvantage of the prior art while taking notice of the fact that as a result of much effort and a careful study by the inventors, exposition of aquatic organisms to electrical stimulus effectively prevents the organisms from adhering to aquatic or fishing facilities or implements while substantially preventing pollution of organisms and water.

Accordingly, it is an object of the present invention to provide an aquatic organism blocking material which is capable of effectively preventing aquatic organisms from adhering to aquatic or fishing facilities or implements.

It is another object of the present invention to provide an aquatic organism blocking material which is capable of blocking adhesion of aquatic organisms to aquatic or fishing facilities or implements utilizing electrical stimulus.

It is a further object of the present invention to provide an aquatic organism blocking material which is capable of substantially preventing pollution of organisms and water.

In accordance with the present invention, an aquatic organism blocking material is provided.

Thus viewed from one aspect the present invention provides an aquatic organism blocking material comprising at least two substances capable of forming an electrode system in the presence of an electrolyte and at least one water absorptive resin, said substances optionally being carried by said water absorptive resin. These substances may conveniently be incorporated into a part of a pigment; more preferably said pigment constitutes a part of a paint.

The water absorptive resin may conveniently be a polyvinyl alcohol, preferably having a degree of saponification of 98.5 mol% or more and a degree of polymerisation of 1000 or less, more preferably a degree of saponification of between 78.5 mol% and 81.5 mol% and a degree of polymerisation of 1500 or more.

In a preferred embodiment the aquatic organism blocking material of the invention comprises at least two metals different in ionisation potential, for example copper and silver, and at least one water absorptive resin. The metals and resin may conveniently be incorporated into a part of a pigment.

In a different preferred embodiment the aquatic organism blocking material of the invention comprises copper, carbon black and at least one water absorptive resin. These substances may conveniently be incorporated into a part of a pigment.

Viewed from a different aspect the present invention provides a method for preventing the attachment of an aquatic organism to a surface comprising the application to said surface of an aquatic organism blocking material as hereinbefore described.

Viewed from a further different aspect the present invention provides the use of a composition as hereinbefore described as an aquatic organism blocking material.

These and other objects and many of the attendant advantages of the present invention will be readily appreciated as the same becomes better understood by reference to the following detailed description when considered in connection with the accompanying drawings; wherein:

Fig. 1 is a schematic view showing a principle of the present invention;

Figs. 2(a) to 2(f) each are a schematic view showing the basic form of an embodiment of an aquatic organism blocking material according to the present invention which is constructed into an aquatic organism blocking paint;

Figs. 3(a) to 3(f) each are a schematic view showing the basic form of another embodiment of an aquatic organism blocking material according to the present invention which is constructed into an aquatic organism blocking fiber;

Figs. 4(a) to 4(c) each are a fragmentary perspective view showing the aquatic organism blocking material of each of Figs. 3(a) to 3(f) which has been subject to a stretching treatment;

Figs. 5(a) to 5(c) each are a perspective view showing the manner of carrying two kinds of metal fibers in or on a rope body of a fishing rope;

Figs. 6(a) to 6(c) are fragmentary schematic views showing examples of the present invention and comparative examples;

Fig. 7 is a partly enlarged schematic view showing a comparison test for examples of the present invention and comparative examples;

Fig. 8 is a perspective view showing a plate test for an aquatic organism blocking material of the present invention;

Fig. 9 is a perspective view showing a beaker test for an aquatic organism blocking material of the present invention; and

Fig. 10 is a perspective view showing an alga adhesion test for an aquatic organism blocking material of the present invention.

Now, the present invention will be described hereinafter with reference to the accompanying drawings.

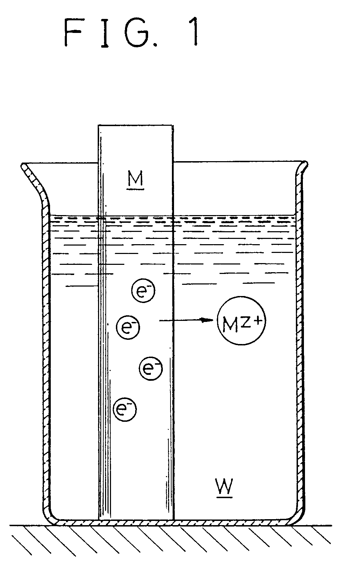

First, the principle of the present invention will be described with reference to Fig. 1.

The present invention is directed to an aquatic organism blocking material comprising at least two substances capable of forming an electrode system in the presence of an electrolyte and at least one water absorptive resin, wherein the substances are carried by the water absorbing resin.

Fig. 1 shows that a metal rod M is inserted into an electrolyte W, wherein the metal rod M gradually dissolves in the form of metal ions $M^{Z+}$ in the electrolyte W, so that Z (Z: integer) electrons $e^-$ are produced in the metal rod M. Supposing that such a state constitutes one system, the system permits electrons $e^-$ to be discharged from the metal bar, to thereby possess a potential peculiar thereto. Such a system may be defined to be an electrode system.

Connection between electrodes constituting such an electrode system results in a cell being formed. For example, a Volta cell uses dilute sulfuric acid as the electrolyte, as well as zinc and copper as the metal rod M and is adapted to generate given electromotive force due to a difference in standard electrode potential between zinc and copper to permit a current to flow from the copper side to the zinc side. Such a galvanic action is established also in a system wherein an electrolyte interposes between two kinds of metal powders. The present invention has been made on the basis of such a principle and, according to one aspect of the present invention, it is constructed so as to form an electrode system including different kinds of electrodes immersed in a paint, so that a current flowing between the electrodes may be used to block adhesion of aquatic organisms to aquatic and fishing facilities and implements.

Now, the electrode system will be exemplified.

First, metal may be used as each of two kinds of substances which are capable of forming an electrode system in the presence of an electrolyte. More particularly, metal M is under an equilibrium condition of $M^{Z+} + Ze^- \rightarrow$(reduction)$\leftarrow$ (oxidation)M in a solution, to thereby form a metal-metal ion electrode system. The following are electrode reactions and standard electrode potentials of various metal-metal ion electrode systems indicated for reference.

| Electrode System | Electrode Reaction | $E°/V$ |
|---|---|---|
| $Li^+/Li$ | $Li^+ + e^- \leftrightarrow Li$ | -3.045 |
| $K^+/K$ | $K^+ + e^- \leftrightarrow K$ | -2.825 |
| $Ca^{2+}/Ca$ | $Ca^{2+} + 2e^- \leftrightarrow Ca$ | -2.906 |
| $Na^+/Na$ | $Na^+ + e^- \leftrightarrow Na$ | -2.714 |
| $Mg^{2+}/Mg$ | $Mg^{2+} + 2e^- \leftrightarrow Mg$ | -2.363 |
| $Al^{3+}/Al$ | $Al^{3+} + 3e^- \leftrightarrow Al$ | -1.662 |
| $Zn^{2+}/Zn$ | $Zn^{2+} + 2e^- \leftrightarrow Zn$ | -0.763 |
| $Fe^{2+}/Fe$ | $Fe^{2+} + 2e^- \leftrightarrow Fe$ | -0.4402 |
| $Cd^{2+}/Cd$ | $Cd^{2+} + 2e^- \leftrightarrow Cd$ | -0.403 |
| $Ni^{2+}/Ni$ | $Ni^{2+} + 2e^- \leftrightarrow Ni$ | -0.250 |
| $Sn^{2+}/Sn$ | $Sn^{2+} + 2e^- \leftrightarrow Sn$ | -0.136 |
| $Pb^{2+}/Pb$ | $Pb^{2+} + 2e^- \leftrightarrow Pb$ | -1.126 |
| $Cu^{2+}/Cu$ | $Cu^{2+} + 2e^- \leftrightarrow Cu$ | 0.337 |
| $Ag^+/Ag$ | $Ag^+ + e^- \leftrightarrow Ag$ | 0.799 |
| $Hg^{2+}/Hg$ | $Hg^{2+} + 2e^- \leftrightarrow Hg$ | 0.854 |

An order of standard electrode potentials as described above corresponds to that of ionization series or tendencies. For reference, ionization series will be generally expressed as follows:

Li>Cs>K>Ba>Sr>Ca>Na>Mg>Be>Al>Mn>Zn>Cr>Fe>Cd>Co>Ni> Sn>Pb>(H)>Sb>Cu>Hg>Ag>Pt>Au

In the present invention, at least two kinds of metals which establish the electrode system may be selected from the above-described ionization series. However, it is a matter of course that other metals may be suitably used for this end. The metals may be selected depending on electromotive force based on a standard electrode potential of each metal-metal ion electrode system, a tendency of polarization, reactivity with water, harmful properties and the like.

Now, the water absorptive resin on which two kinds of metal powders are carried will be described.

In order to permit at least two kinds of metal powders to act as electrodes in a paint, an electrolyte which permits metal ionization to be carried out is required. Also, the electrolyte is required to serve as a medium which permits electrons $e^-$ to be transferred between the metal and other metal ions. However, initial presence of the electrolyte in a paint causes the galvanic action of the electrode system to be deteriorated during storage of the paint. In order to avoid the problem, the embodiment is so constructed that the metal powders are carried on the water absorptive resin to minimize or substantially prevent generation of a current during the storage. The water absorptive resin absorbs seawater in use, leading to gelation, so that the so-gelled resin permits transfer of electrons to be carried out through the seawater.

The water absorptive resin used for this purpose includes water-soluble resins such as polyvinyl alcohol, sodium polyacrylate, methyl cellulose carboxymethyl cellulose, polyethylene oxide, polyvinyl pyrrolidone, acrylic amide, gelatin, glue, casein, polypeptide, starch, cellulose, dextrin, albumin, soy protein, gum arabic, tragacanth gum, a glue plant (funori), sodium alginate and the like. However, the water absorptive resins are not limited to such exemplification. For example, they may further include high-absorptive resins such as, for example, a saponified product of a vinyl acetate-methyl acrylate copolymer, a vinyl alcohol-acrylate copolymer, an acrylic acid-acrylate ester copolymer, a saponified product of polyacrylonitrile a starch-acrylonitrile graft copolymer, a starch-acrylic acid copolymer and the like.

In the present invention, the substances capable of forming an electrode system in the presence of an electrolyte such as a combination of copper and silver, a combination of copper and carbon blacks or the like are carried on the water absorptive resins different from each other, respectively. Alternatively, the substances may be carried on the same water absorptive resin.

The paint suitable for use in the material of the embodiment into which at least two kinds of metal powders different in ionization tendency are incorporated while being carried on the water absorptive resin may include such bottom paints as conventionally used. More particularly, it includes a paint formed by mixing a resin ingredient, a body pigment, a coloring pigment, a plasticizer, an additive and the like together in suitable ratios. The resin ingredient includes chlorinated rubber, polyvinyl chloride, vinyl chloride-vinyl propionate copolymer, chlorinated polyolefin acrylic resin, styrene-butadiene copolymer, rosin, rosin ester, rosin soap and the like. The body pigment includes calcium carbonate, talc, silica, barium sulfate, clay and the like. The coloring pigment includes titanium white, red oxide and the like, and the plasticizer includes dioctyl phthalate, tricresyl phosphate, chlorinated paraffin and the like. The additive includes an anti-settling agent, an anti-drooping agent, a leveling agent and the like.

The above is derived from the metal-metal ion electrode system established in the paint. An electrode system which may be formed in the paint is not limited to the metal-metal ion combination. For example, the electrode system may further include a gaseous electrode system, an oxidation-reduction electrode system, a combination thereof and the like. The following are electrode reactions and standard electrode potentials of various electrode systems indicated for reference.

| Electrode System | Electrode Reaction | $E\,°/V$ |
|---|---|---|
| $Pt/I^-,\ I_2$ | $I_2\ +\ 2e^-\ \leftrightarrow 2I^-$ | 0.536 |
| $Pt/Br^-,\ Br_2$ | $Br_2\ +\ 2e^-\ \leftrightarrow 2Br^-$ | 1.065 |
| $Pt/Cl^-,\ C_2$ | $Cl_2\ +\ 2e^-\ \leftrightarrow 2Cl^-$ | 1.360 |
| $Pt/O_2/H_2O$ | $1/2O_2\ +\ 2H^+\ +\ 2e^-\ \leftrightarrow H_2O$ | 1.23 |
| $Ag/AgCl/Cl^-$ | $AgCl\ +\ e^-\ \leftrightarrow Ag\ +\ Cl^-$ | 0.222 |
| $Hg/Hg_2Cl_2/Cl^-$ | $Hg_2Cl_2\ +\ 2e^-\ \leftrightarrow 2Hg\ +\ 2Cl^-$ | 0.2676 |
| $Pt/V^{2+},\ V^3$ | $V^{3+}\ +\ e^-\ \leftrightarrow V^{2+}$ | -0.256 |
| $Pt/Fe^{2+},\ Fe^{3+}$ | $Fe^{3+}\ +\ e^-\ \leftrightarrow Fe^{2+}$ | 0.77 |
| $Pt/Ce^{3+},\ Ce^{4+}$ | $Ce^{4+}\ +\ e^-\ \leftrightarrow Ce^{3+}$ | 1.61 |
| $Pt/SO_4^{2-},\ S_2O_8^{2-}$ | $S_2O_8^{2-}\ +\ 2e^-\ \leftrightarrow 2SO_4^{2-}$ | 2.01 |

When the electrolyte is alkaline, ionization of metal forms any oxide or hydroxide, resulting in a different electrode reaction. In the illustrated embodiment, the water absorptive resin absorbs seawater to form gel when the paint is used, to thereby permit electrons to be transferred through the absorbed seawater; thus, the electrolyte is considered to exhibit weak alkali of pH between 8.2 and 8.4. It is also considered that when the water absorptive resin contains alkaline metal, alkaline earth metal or the like, seawater absorbed in the water absorptive resin is further increased in pH. The following are electrode reactions and standard electrode potentials which are applied to the embodiment when the electrolyte is alkaline.

| Electrode System | Electrode Reaction | $E°g/V$ |
|---|---|---|
| $Pt/H_2/H_2O$ | $2H_2O + 2e^- \leftrightarrow H_2 + 2OH^-$ | -0.827 |
| $Cd(OH)_2/Cd$ | $Cd(OH)_2 + 2e^- \leftrightarrow Cd + 2OH^-$ | -0.809 |
| $Ni(OH)_2/Ni$ | $Ni(OH)_2 + 2e^- \leftrightarrow Ni + 2OH^-$ | -0.72 |
| $S/S^{2-}$ | $S + 2e^- \leftrightarrow S^{2-}$ | -0.447 |
| $Cu/Cu(CN)_2^-$ | $Cu(CN)_2^- + e^- \leftrightarrow Cu + 2CN^-$ | -0.429 |
| $HgO/Hg$ | $HgO + H_2O + 2e^- \leftrightarrow Hg + 2OH^-$ | 0.098 |
| $Ag_2O/Ag$ | $Ag_2O + H_2O + 2e^- \leftrightarrow 2Ag + 2OH^-$ | 0.345 |
| $Pt/O_2/OH^-$ | $O_2 + 2H_2O + 4e^- \leftrightarrow 4OH^-$ | 0.401 |
| $AgO/Ag_2O$ | $2AgO + H_2O + 2e^- \leftrightarrow Ag_2O + 2OH^-$ | 0.607 |
| $Cu/Cu(NH_3)_2^+$ | $Cu(NH_3)_2^+ + e^- \leftrightarrow Cu + 2NH_3$ | -0.12 |

An electrode system comprising a combination of electrodes carries out an oxidation-reduction reaction wherein any one of the electrodes emits electrons and the other electrode receives the electrons. Thus, any electrode systems other than the above may be applied to the present invention so long as they can carry out an oxidation-reduction reaction.

As can be seen from the foregoing, various substances can form an electrode system in the presence of an electrolyte. In view of an aquatic organism blocking action and economical efficiency, it has been found that the most preferable electrode system includes a combination of copper and silver or that of copper and carbon black. Now, such combinations will be detailedly described hereinafter.

One of the combinations provides an embodiment of the present invention which relates to an aquatic organism blocking material comprising at least two kinds of metals different in ionization tendency and at least one water absorptive resin, which are incorporated into a part of the pigment.

The other combination provides another embodiment of the present invention which relates to an aquatic organism blocking material comprising copper, carbon black and at least one water absorptive resin which are incorporated into a part of the pigment.

Thus, it will be noted that both embodiments provide a pigment with an aquatic organism blocking action. The pigment may constitute a part of a paint.

In each of the embodiments, the above-described substances may be used as the water absorptive resin. Polyvinyl alcohol is particularly preferably used as the water absorptive resin. More particularly, when polyvinyl alcohol is incorporated in the pigment or paint, it absorbs seawater to form gel, which permits electrons $e^-$ to be transferred between both metals or between the copper powder and carbon black, and inherently exhibits slimy properties sufficient to prevent or block the adhesion of aquatic organisms, as detailedly described hereinafter. Also, polyvinyl alcohol is readily adjusted in degrees of polymerization and saponification thereof, so that a life of polyvinyl alcohol or a period of time for which it effectively exhibits a desired aquatic organism blocking action may be adjusted as desired.

Table 1 shows, in a matrix-like manner, combinations of degrees of polymerization and saponification of polyvinyl alcohol which is sold under a tradename "GOHSENOL" from Nippon Gosei Kagaku Kabushiki Kaisha and may be prepared into various grades depending upon the combination, in which L indicates a degree of polymerization below 1000, M is a degree of polymerization between 1000 and 1500, and H is a polymerization degree above 1500; and K indicates a partial saponification type (78.5 to 81.5 mol%), A is a partial saponification type (86.5 to 89.0 mol%), G is a complete saponification type (98.4 to 97.7 mol%) and N is a complete saponification type (99.0 to 100 mol%).

Table 1

| Degree of Saponification | Degree of Polymerization | | |
|---|---|---|---|
| | L | M | H |
| K | | | BETTER |
| G | | | |
| A | | | |
| N | BEST | | |

Table 1 clearly indicates that in view of the life and manufacturing, polyvinyl alcohol of which a degree of polymerization is L or below 1000 and a degree of saponification is N or above 99.0 mol% is most suitably used in the present invention. Polyvinyl alcohol having a degree of polymerization above 1500 and a degree of saponification between 78.5 mol% and 81.5 mol% ranks second irrespective of being increased in viscosity to a degree sufficient to be hard to be powdered. Thus, it will be noted that polyvinyl alcohol of which a degree of saponification is high and a degree of polymerization is low and polyvinyl alcohol of which a degree of saponification is low and a degree of polymerization is high is preferably used in the present invention.

Polyvinyl alcohols positioned at the top left-hand corner of Table 1 and therearound each easily dissolves in water, to thereby fail to lastingly exhibit an aquatic organism blocking action, whereas those positioned at the bottom right-hand corner of Table 1 and therearound each are highly hard to dissolve in water and hard to be powdered.

Now, the relationship between polyvinyl alcohol and metal powders and the manufacturing process will be described.

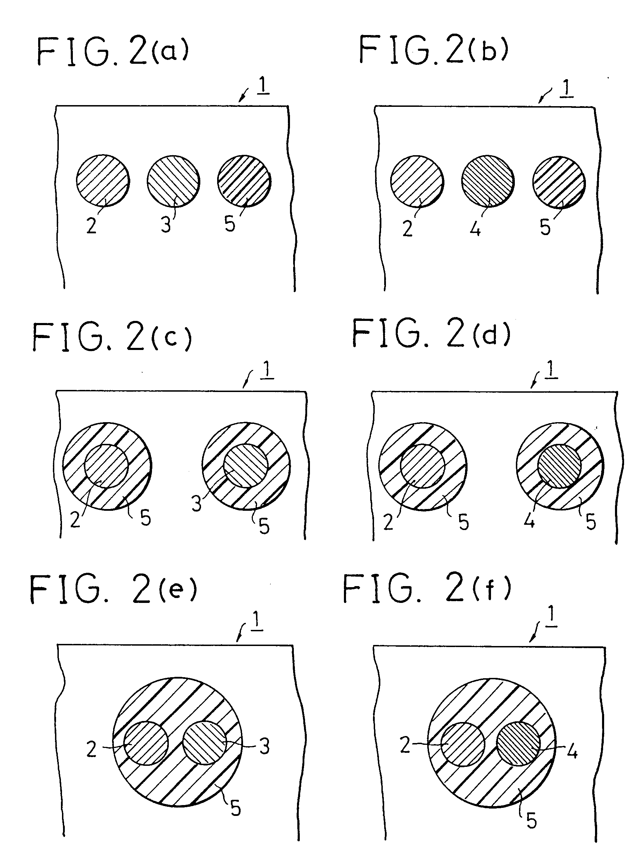

The aquatic organism blocking material of the present invention which is embodied as a pigment may take various forms as shown in Figs. 2(a) to 2(f). In Figs. 2(a) or 2(b), copper powder 2 and silver powder 3 or carbon black powder 4 are present independently from polyvinyl alcohol particles 5. In Figs. 2(c) or 2(d), the copper powder 2 and the silver powder 3 or carbon black powder 4 each are covered with polyvinyl alcohol 5. In Figs. 2(e) or 2(f), the copper powder 2 and silver powder 3 or the copper powder 2 and carbon black powder 4 are covered together by polyvinyl alcohol 5.

Manufacturing of the aquatic organism blocking material or pigment of each form will be exemplified in connection with the combination of copper and silver as shown in each of Figs. 2(a), 2(c) and 2(e). However, the manufacturing manner described hereinafter is likewise applied to any combination of at least two metals different in ionization tendency, a combination of copper and carbon black, and the like. The aquatic organism blocking material having such a form as shown in Fig. 2(c) is prepared by dispersing the copper powder 2 and silver powder 3 in separate aqueous polyvinyl alcohol solutions 5, respectively. Then, the copper powder 2 and silver powder 3 are taken out from the solutions and heated for drying, resulting in being covered or coated with the polyvinyl alcohol 5 to form particles, which are then dispersed in a paint, to thereby provide the material 1 shown in Fig. 2(c).

Alternatively, the material 1 may be prepared by incorporating the copper powder 2 and silver powder 3 together in the polyvinyl alcohol 5 while mixing proceeds, to thereby disperse the powders in the alcohol 5. This causes particles of the copper powder 2 coated with the alcohol 5 and particles of the silver powder 3 covered with the alcohol 5 to be present while being mixed with particles formed of only the polyvinyl alcohol 5.

The aquatic organism blocking material of the form shown in Fig. 2(e) is prepared by dispersing the copper powder 2 and silver powder 3 together in the polyvinyl alcohol 5 or dispersing a mixture of the copper powder 2 and silver powder 3 previously mixed in the alcohol 5, so that particles of the copper powder 2 and silver powder 3 covered together by the polyvinyl alcohol 5 may be formed. Then, the particles are taken out and heated for drying. Thereafter, the particles are dispersed in paint, to thereby provide the material 1 shown in Fig. 2(e).

In Figs. 2(c) and 2(e), the dispersion of the copper powder 2 and silver powder 3 in the polyvinyl alcohol 5 while mixing may be carried out using a suitable dispersion unit such as a porcelain ball mill, a centrifugal grinding mill or the like.

Each of the manufacturing processes described above is for a laboratory rather than otherwise. Mass production of the material may be carried out according to a freeze drying method which comprises the steps of, for example, dispersing the copper powder and silver powder in the water absorptive resin to prepare a liquid mixture, spraying the mixture into a freezing chamber to instantaneously form frozen particles and subjecting the particles to vacuum drying.

Alternatively, the mass production may be carried out using mechanical surface modifying techniques. For example, it may be accomplished in such a manner that the copper powder, silver powder and water absorptive resin are exposed to mechanical and thermal energy mainly consisting of impact force in a treating chamber while being dispersed in a gaseous phase in the treating chamber, to thereby cause the copper powder and silver powder to be struck into the water absorptive resin, so that the powders may be embedded or fixed in the resin. For this purpose, sandblasting or the like may be employed. Alternatively, such techniques as disclosed in Japanese Patent Application Laid-Open Publication No. 83029/1987, Japanese Patent Application Laid-Open Publication No. 262737/1987 and Japanese Patent Application Laid-Open Publication No. 298443/1987 and the like may be suitably employed. The treatment may be carried out using a machine sold under a tradename "Nara Hybridization System" from Kabushiki Kaisha Nara Kikai Seisakusho, a machine sold under a tradename "Angmill" from Kabushiki Kaisha Hosokawa Micron or the like.

The pigment containing at least two kinds of metals and at least one water absorptive resin or that containing the copper, carbon black and at least one water absorptive resin which is prepared as described above is then incorporated into the paint, resulting in an aquatic organism blocking material of the present invention.

Also, the present invention may be so embodied that powders of at least two kinds of metals different in ionization tendency are dispersed in at least one thermoplastic resin and then subjected to spinning, resulting in an aquatic organism blocking material of the present invention.

A further embodiment of the present invention may be constructed in such a manner that copper and carbon black are dispersed in at least one thermoplastic resin and then subjected to spinning, resulting in an aquatic organism blocking material of the present invention.

In these embodiments, the thermoplastic resin used may have moisture absorptive properties.

The thermoplastic resin may include thermoplastic resins having an official regain of 0 such as polyvinyl chloride, polyethylene, polypropylene and the like, and thermoplastic hygroscopic absorptive resins having an official regain above 0 such as polyester, polyurethane, acrylic resin, nylon and the like.

In each of both embodiments, fibers formed of the thermoplastic resin absorbs seawater to act as an electrolyte between the metals or between the metal and the carbon black, to thereby block aquatic organisms. Thus, when the thermoplastic resin is moisture absorptive or hygroscopic, it absorbs to hold it therein; whereas when it is not hygroscopic or has an official regain of 0, water absorptive resin such as polyvinyl alcohol or the like may be incorporated in the material in order to hold seawater between the two kinds of metals. Such incorporation of the water absorptive resin may take place also when the thermoplastic resin is hygroscopic. The water absorptive resins may be used for this purpose. It is a matter of course that the above-described high absorptive resins may be conveniently used.

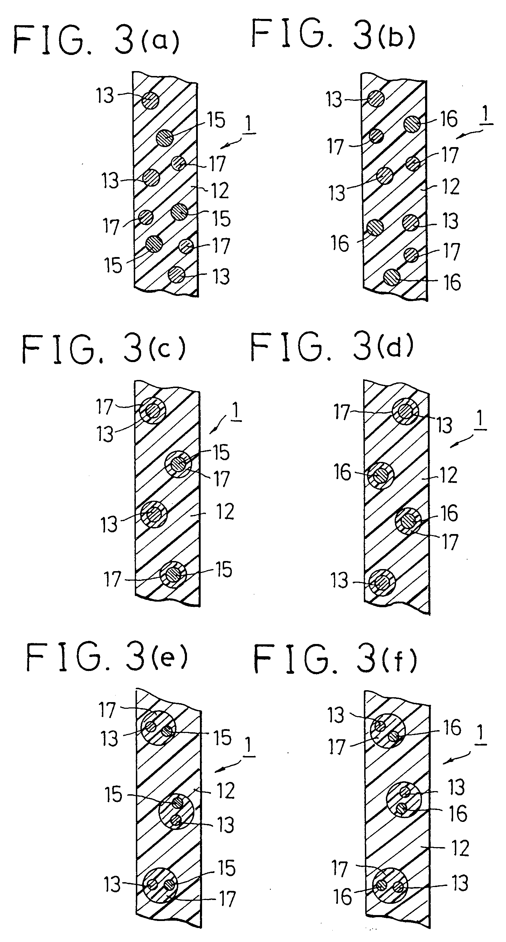

Now, a structure of each of the aquatic organism blocking materials of these two embodiments will be described together with the manufacturing process with reference to Figs. 3(a) to 3(f).

The aquatic organism blocking material designated at reference numeral 1 in Figs. 3(a) to 3(f) comprises a thermoplastic resin 12 constituting fibers, and copper powder 13 and powder 15 of metal having an ionization tendency smaller than copper such as, for example, silver powder or non-metal powder 16 which are supported or carried in the thermoplastic resin 12. Also, polyvinyl alcohol 17 may be incorporated in the thermoplastic resin 12 as well. Incorporation of the polyvinyl alcohol 17 in combination with the above-described powders in the thermoplastic resin 12 is for the reason that the alcohol absorbs seawater to exhibit slimy properties sufficient to physically prevent adhesion of aquatic organisms. Another reason is that adjustment of degrees of polymerization and saponification of the alcohol is facilitated to control the life of the material as desired.

The relationships between the polyvinyl alcohol 17 and the copper powder 13 and between the polyvinyl alcohol 17 and the silver powder 15 or carbon black 16 may be as shown in Figs. 3(a) to 3(f). More specifically, as shown in Figs. 3(a) or 3(b), the copper 13 and the silver 15 or carbon black 16 may be present independently from particles of polyvinyl alcohol 17; or as shown in Figs. 3(c) or 3(d), the copper 13 and the silver 15 or carbon black 16 each may be covered with polyvinyl alcohol 17. Alternatively, as shown in Figs. 3(e) or 3(f), the copper 13 and silver 15 or the copper 13 and carbon black 16 may be covered or coated together by polyvinyl alcohol 17.

The structure of the material 1 shown in each of Figs. 3(a) and 3(b) or a structure in which only at least two kinds of metal powders or copper and carbon black are supported on the fibers requires the thermoplastic resin to be hygroscopic; whereas the structure shown in each of Figs. 3(c) to 3(f) does not care whether or not the thermoplastic resin is hygroscopic.

Now, manufacturing of the aquatic organism blocking material 1 will be exemplified in connection with a combination of copper and silver shown in Figs. 3(a), 3(c) and 3(e). The following description will be likewise applied to any combination of at least two kinds of metals different in ionization tendency and other than the combination of copper and silver, and a combination of copper and carbon black.

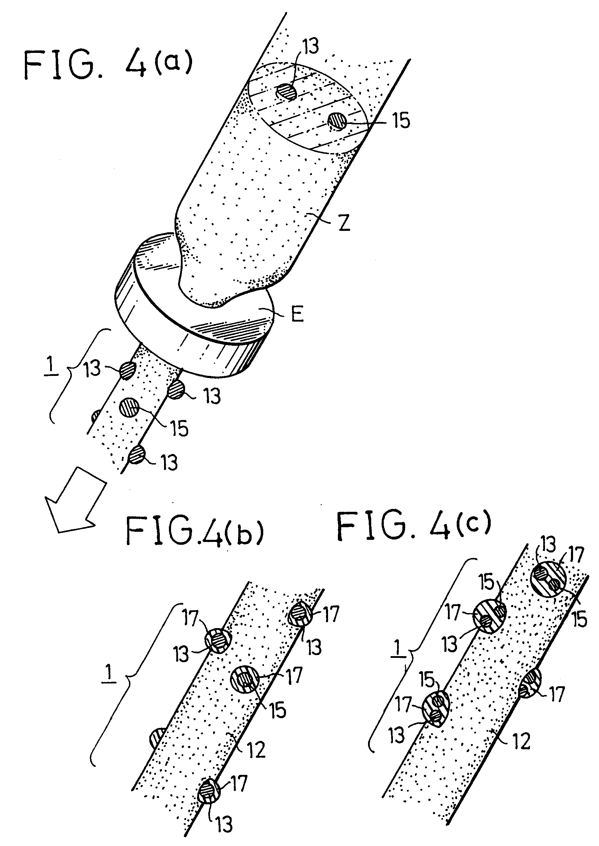

The material which assumes the shape shown in Fig. 3(a) is prepared by separately incorporating the copper powder 13, silver powder 15 and polyvinyl alcohol powder 17 into the thermoplastic resin 12 melted by heating and then dispersing them therein while stirring proceeds to obtain a dispersion. Then, the dispersion is extruded through an extruder E as shown in Fig. 4(a), followed by being cooled, resulting in the material 1 of Fig. 3(a).

The material shown in Figs. 3(c) is obtained by dispersing the copper powder 13 and silver powder 15 in separate aqueous solutions of the polyvinyl alcohol 17, respectively, taking out the powders 13 and 15 from the solutions, and drying the powders by heating to form particles wherein the copper powder 13 and silver powder 15 are covered or coated with the polyvinyl alcohol 17. Then, the particles are incorporated in the thermoplastic resin 12 melted by heating and then dispersed therein while stirring to prepare a dispersion, which is then treated through the extruder E and cooled, leading to the aquatic organism blocking material 1 of Fig. 3(c).

The material 1 of Fig. 3(c) may be also prepared by mixing the copper powder 13 and silver powder 15 together in the polyvinyl alcohol 17 to prepare a mixture and then dispersing the mixture in the thermoplastic resin 12 while stirring. In the so-obtained material 1, particles formed of the copper powder 13 covered with the polyvinyl alcohol 7 and particles formed of the silver powder 15 covered with the polyvinyl alcohol 17 are present while being mixed with droplets of only the polyvinyl alcohol 17.

The aquatic organism blocking material 1 of Fig. 3(e) is prepared by dispersing the copper powder 13 and silver powder 15 together in polyvinyl alcohol 17 or dispersing a mixture of the copper powder 13 and silver powder 15 previously mixed together in the polyvinyl alcohol 17. This leads to particles of the copper powder 13 and silver powder 15 which are covered together by the polyvinyl alcohol. Then, the particles are taken out from the polyvinyl alcohol 17 and then dispersed in thermoplastic resin 12 while stirring. The above-described incorporation and dispersion of the copper powder 13 and silver powder 15 may be carried out using a suitable dispersing unit such as a porcelain ball mill, a centrifugal grinding mill or the like.

Thus, the aquatic organism blocking material 1 of each of Figs. 3(a) to 3(f) is obtained. A surface of the material 1 may be subject to stripping-off to expose the copper powder 3 and silver powder 5 or carbon black 16 from the surface of the material during stretching of the material as shown in Fig. 4. Alternatively, the material 1 may be subject to a corona discharge treatment in an ozone atmosphere to roughen the surface of the material. These treatments permit the metal powders to be satisfactorily contacted with seawater.

The so-prepared material 1 in the form of fibers may be woven into cloth, which may be used for sand guards for a bank or the like. Also, it may be formed into a fishing net such as a fixed shore net, a rope for a longline or the like. The fabric may be formed by dispersing the copper powder 13 and the silver powder 15 or carbon black 16 in the thermoplastic resin 12 to prepare a dispersion and forming the dispersion directly into non-woven fabric using a direct jet spinning treatment without requiring the step of forming the fibers.

Further, the present invention may be embodied in such a manner that fibers of at least two kinds of metals are carried on a substance for an implement used in a water area which is substantially constructed into a linear structure or contains the linear structure. Also, the embodiment may be so constructed that the linear structure comprises a twisted yarn of fibrins and the metal fibers are twisted together with fibrins. Alternatively, the metal fibers may be wound around the twisted yarn.

In the embodiment, the metal fibers each comprise a monofilament may be in the form of a single long fiber, a tow formed by bundling filaments or a short fiber. The metal fibers may be formed, for example, by pressing a knife edge of a width on an end surface of a cylinder of a thin strip-like metal foil rolled and rotating the cylinder about its axis, to thereby continuously cut the end surface of the metal foil, as disclosed in Japanese Patent Application Laid-Open Publication No. 153231/1989. The method disclosed permits flexible long metal fibers to be produced with high efficiency and at low costs. Alternatively, the metal fibers may be produced by extruding molten metal through a mouthpiece and then cooling it, resulting in being formed into a monofilament-like shape.

The implement used in a water area means an implement used in the ocean, a shore, a lake, a river or the like, which includes a fishing net such as a fixed shore net, a gill net or the like, a fishing rope such as a longline, a fishing implement such as a fish preserve, and the like, as well as a mooring rope for a pleasure boat or the like, a holding net for a masonry bank or shore, an implement for shore or bank protection, and the like. The implement to which the present invention is applied is substantially constructed into a linear structure or contains the linear structure. The word "linear structure" used herein means a structure having a length substantially increased as compared with a dimension or diameter of a section. The linear structure includes, for example, an article such as a rope formed by twisting fibrins, an article such as a fishing line formed by stretching synthetic resin, and the like. Thus, the implement which is substantially constructed into a linear structure includes articles of an elongated configuration such as, for example, a rope, a cord, a string, a line and the like. The implement which contains the linear structure includes articles such as a net wherein the whole comprises a combination of the linear structure, articles having the linear structure as a part thereof, and the like. Substances for these implements include natural fiber such as flax or cotton, synthetic fiber such as nylon or polyester, and the like, as well as coated fiber formed by coating a metal line with an insulating substance and the like.

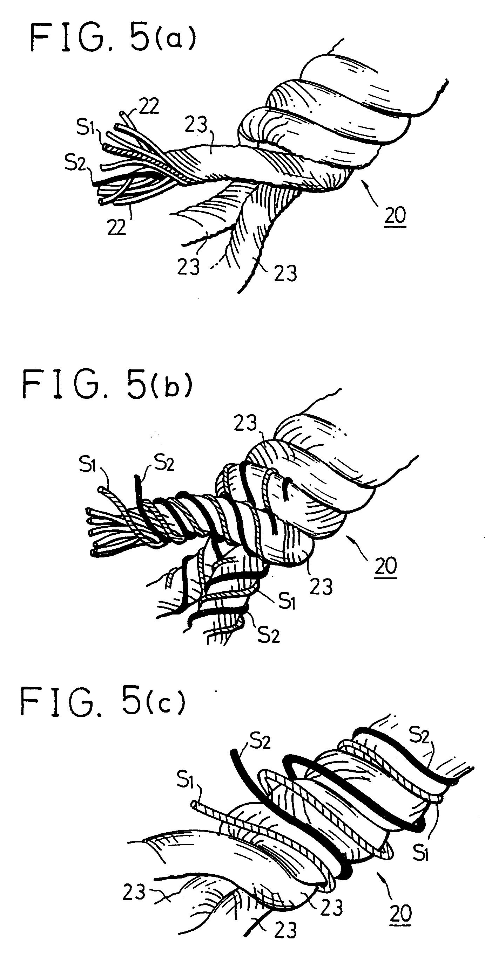

Now, the manner of carrying the aquatic organism blocking material of the present invention on the implement used in a water area will be exemplified in connection with a fishing implement in the form of a rope body for a longline which contains a twisted yarn of fibrins as its component, with reference to Figs. 5-(a) to 5(c).

A rope body generally designated at reference numeral 20 is a twisted rope formed by twisting a plurality of rope elements 23 each obtained by twisting a plurality of fibrins 22. The rope body 20 may have, for example, fibers $S_1$ and $S_2$ of two kinds of metals carried therein by twisting the metal fibers together with the fibrins 22, as shown in Fig. 5(a). Alternatively, carrying of the metal fibers $S_1$ and $S_2$ may be carried out by winding the fibers around each of the rope elements 23 as shown in Fig. 5 (b) or winding the fibers around the rope body 20 as shown in Fig. 5(c).

Carrying of the metal fibers in the rope body 20 in such a manner as shown in Fig. 5(a) causes seawater soaking into gaps between the fibrins 22 to interpose between the metal fibers $S_1$ and $S_2$, resulting in a cell being formed between the metal fibers. The carrying manner of Fig. 5(a) causes the metal fiber having a larger ionization tendency to dissolve in the seawater, so that voids would be formed in the rope body 20 to often decrease strength of the rope body 20. However, the flowing of seawater between the fibrins 22 is sufficiently low to highly reduce dissolution of the metal fibers $S_1$ and $S_2$ in sea water, to thereby avoid the problem and permit the aquatic organism blocking material to exhibit a galvanic action for a long period of time.

The carrying manner shown in Fig. 5(b) causes a part of the metal fibers to be contacted directly with seawater, to thereby exhibit a galvanic action. Then as seawater soaks between the fibrins 22, a galvanic action is exhibited in the interior of the rope body 20 as well. In such carrying manner, dissolution of the metal fibers in sea water causes strength of the aquatic organism blocking material to be somewhat decreased. However, the decrease is less than in Fig. 5(a). Also, the carrying manner causes a strong galvanic action to exhibited as compared with that of Fig. 5(a) because a part of the metal fibers is directly contacted with seawater, however, persistency of the galvanic action is reduced correspondingly.

In the carrying manner shown in Fig. 5(c), the metal fibers $S_1$ and $S_2$ are wholly contacted directly with seawater, so that only a surface of the rope body 20 exhibits a galvanic action. The carrying manner does not cause a decrease in strength of the rope body 20 with dissolution of the metal fiber and exhibits an advantage of permitting the metal fibers to be wound around the rope body later.

In view of the fact that a contact point between two electrodes generally produces resistance, it is generally preferable that the carrying manner shown in each of Figs. 5(a) to 5(c) takes place so as to prevent at least two kinds of metal fibers $S_1$ and $S_2$ from being contactedly crossed each other; however, the crossing does not substantially adversely affect the present invention, so that the present invention does not exclude any carrying manner which causes such crossing as described above. Also, the carrying shown in each of Figs. 5(a) to 5(c) is likewise applicable to a yarn for a fishing net or a fish preserve, a single yarn and the like.

The foregoing is directed to carrying of the metal fibers in or on a component of a fishing implement by twisting or winding. However, other suitable carrying ways using, for example, an adhesive, an adhesive tape or the like may be employed. Also, the metal fibers may be used as formed. Alternatively, the metal fibers each may be subject on a surface thereof to a coating treatment. The so-formed coating is gradually removed in seawater, to thereby permit a galvanic action to gradually proceed correspondingly, resulting in enhancing persistency of the aquatic organism blocking action of the fibers.

The aquatic organism blocking material of the present invention constructed as described above may be incorporated in a bottom paint. When the bottom paint is applied to a ship bottom and contacted with seawater, one of the metals dissolves in the form of an ion in seawater to permit a galvanic action to be exhibited, so that the material of the present invention effectively prevents aquatic organisms from adhering to the ship bottom due to formation of the ion, generation of a current by the galvanic action and a variation of ingredients in seawater which synergistically affect each other. Also, incorporation of polyvinyl alcohol in the material permits it to exhibit a self-cleaning action. Also, desired adjustment of degrees of saponification and polymerization of the alcohol permits a life of the aquatic organism blocking material to be controlled as desired.

Also, as described above, the aquatic organism blocking material of the present invention may comprise powders of at least two kinds of metals different in ionization tendency and at least one thermoplastic resin in which the powders are dispersed to form a dispersion which is subjected to spinning. Alternatively, the aquatic organism blocking material of the present invention may comprise copper and carbon black, and at least one thermoplastic resin in which the copper and carbon black are dispersed to form a dispersion which is subjected to spinning. Such construction of the present invention, when the thermoplastic resin is hygroscopic, permits the material to absorb seawater. When the water absorptive resin is carried in the material, the resin absorbs seawater soaking into the material.

Now, these advantages of the present invention will be detailedly described hereinafter.

First, blocking of aquatic organisms due to discharge of metal ions by dissolution of the metal which has been briefly described above will be described hereinafter.

In general, metal partially dissolves in an electrolyte to discharge metal ions therein, to thereby keep equilibrium $Me \leftrightarrow Me^{n+} + ne^-$ . However, when a chemical substance which has an ionization tendency or an electron accepting capacity larger than the metal is present in the same electrolyte, a series of electrochemical reactions wherein it receives the electrons $e^-$ discharged from the metal and feeds the electrons to chlorine ions or the like in seawater proceed, leading to generation of chlorine gas. This causes the equilibrium $Me \leftrightarrow Me^{n+} + ne^-$ to be broken, so that the reaction proceeds in the right direction. This permits discharge of the metal ions into the electrolyte to be promoted to ensure continuous feeding of the ions to the electrolyte, so that the material of the present invention continuously blocks aquatic organisms through discharge of the ions for a long period of time.

When the metal is copper, a reaction $Cu \leftrightarrow Cu^{2+} + 2e^-$ proceeds in the right direction in the presence of silver, carbon black or the like to produce copper ions, to thereby continuously block adhesion of aquatic organisms.

The aquatic organism blocking material shown in each of Figs. 2(c) and 2(d) is so constructed that copper and metal of an ionization tendency smaller than copper or carbon black are independently covered with polyvinyl alcohol. Therefore, transfer of electrons depends on probability of encounter between copper and the metal of an ionization tendency smaller than copper or carbon black. The materials of Figs. 2(e) and 2(f) each are so constructed that the copper and metal having a smaller ionization tendency than copper or carbon black are covered together by polyvinyl alcohol. In such construction, absorption of water by polyvinyl alcohol permits transfer of electrons to be carried out to relatively promote discharge of copper ions into seawater. In Figs. 2(e) and 2(f), the copper powder 2 and silver powder 3 are shown in a manner to be separate from each other, however, the powders may be contacted with each other. In this case, copper-silver alloy may be used.

Now, blocking of aquatic organisms due to generation of a current by dissolution of the metal will be described hereinafter.

As described above, under the conditions that discharge of copper ions is promoted, electrons discharged due to ionization of copper transfer to metal of a smaller ionization tendency than copper such as, for example, silver and then is fed to chlorine ions and the like in seawater, resulting in production of chlorine gas and the like. Such mechanism is a galvanic action, to thereby permit a current to flow between the metals because the metals are different in ionization tendency. The so-generated current effectively blocks adhesion of aquatic organisms. Also, chlorine produced on the side of the metal of a smaller ionization tendency which constitutes an anode likewise blocks aquatic organisms.

Generation of a current in the aquatic organism blocking material shown in each of Figs. 2(a) and 2(c) depends on probability of encounter between copper and the metal of a smaller ionization tendency; whereas in the material of each of Figs. 2(e) and 2(f), the generation is started immediately after polyvinyl alcohol absorbs seawater.

Next, blocking of aquatic organisms due to a modification or variation of ingredients in seawater will be described.

A current generated as described above causes ingredients in seawater to be modified or varied due to electrolysis or the like. Also, chlorine produced on the side of the metal of a smaller ionization tendency which constitutes the anode dissolves in seawater to modify the ingredients or vary a composition of seawater around the aquatic organism blocking material. Thus, the surrounding seawater is modified or varied in composition to a degree sufficient to block adhesion of aquatic organisms.

The aquatic organism blocking material of the present invention also exhibits an aquatic organism blocking action due to a self-cleaning function of polyvinyl alcohol. More particularly, absorption of sea water by polyvinyl alcohol permits its surface to exhibit slimy properties sufficient to prevent or restrain aquatic organisms from adhering to the material. Also, in the material shown in each of Figs. 2(c) to 2(f), polyvinyl alcohol gradually abrades itself, to thereby permit a speed of discharge of copper ions to be reducedly controlled, leading to persistency of the aquatic organism blocking action.

Also, when polyvinyl alcohol is controlled to have a degree of saponification above 98.5 mol% or between 78.5 mol% and 81.5 mol% and correspondingly have a degree of polymerizatlon below 1000 or above 1500, persistency of the aquatic organism blocking action is further improved and manufacturing of the material is facilitated.

Further, as described above, the aquatic organism blocking material of the present invention may comprise fibers of at least two kinds of metals carried on a substance for an implement used in a water area such as a fishing implement which is substantially constructed into a linear structure or contains the linear structure. Such construction, when the fishing implement is immersed in seawater, permits seawater to interpose between at least two kinds of metal fibers carried on the implement to form a cell exhibiting a galvanic action, to thereby prevent aquatic organisms from adhering to the implement. This is likewise accomplished in a freshwater area such as a lake, a river, a dam or the like, because water and various ions dissolved in therein exhibit an action similar to seawater when they interpose between the metal fibers.

When the aquatic organism blocking action by the ions of the metal fiber is exhibited simultaneously with the blocking action by the current, the metal fiber may be combined with a metal fiber of a smaller ionization tendency. This permits a cell to be formed between both metal fibers, so that ionization of the metal fiber is continuously carried out without reaching any equilibrium, to thereby ensure persistency of the aquatic organism blocking action by the metal ions.

The present invention will be understood more readily with reference to the following examples; however, these examples are intended to illustrate the invention and are not to be construed to limit the scope of the invention.

In the following Examples 1 and 2, as the water absorptive resin was used polyvinyl alcohol sold under a tradename "Gohsenol GM-14" from Nippon Gosei Kagaku Kabushiki Kaisha. Also, aluminum powder (VA-200, average particle diameter: 5 to 10$\mu$) manufactured by Yamaishi Kinzoku Kabushiki Kaisha and copper powder (MF-D$_3$, average particle diameter: 13$\mu$) manufactured by Mitsui Kinzoku Kogyo Kabushiki Kaisha were used as metals different in ionization tendency. Acrylic resin was used as the paint ingredient.

Example 1

1 part of aluminum powder and 1 part of copper powder were incorporated together in 50 parts of 10% aqueous Gohsenol GM-14 solution to prepare a mixture, which was then dried while stirring and ground using a coffee mill and a ball mill. The resultant mixture was subject to a screening treatment, resulting in particles of 100$\mu$ or less in particle diameter being taken out. 40 parts of the particles were dispersed in 60 parts of acrylic resin while mixing proceeds, to thereby obtain the aquatic organism blocking material according to the present invention.

Example 2

Two 10% aqueous Gohsenol GM-14 solutions were prepared. 1 part of aluminum powder was added to and mixed with 25 parts of one of the aqueous solutions and 1 part of copper powder was added to and mixed with 25 parts of the other aqueous solution, to thereby obtain mixtures. Then, each of the resultant mixtures was dried while stirring and then ground using a coffee mill and a ball mill. The ground mixtures each were then subject to a screening treatment to obtain particles of 100$\mu$ or less in particle diameter. 20 parts of the respective particles were dispersed in 60 parts of acrylic resin while mixing, resulting in the aquatic organism blocking material of the present invention being obtained.

In the following Examples 3 to 7, the aquatic organism blocking material shown in each of Figs. 2(a) to 2(c) was prepared. In preparation of the material shown in Fig. 2(a), powdered polyvinyl alcohol sold under a tradename "Gohsenol GM-14"® from Nippon Gosei Kagaku Kabushiki Kaisha was used as the water absorptive resin; whereas in preparation of material shown in each of Figs. 2(b) and 2(c), aqueous solution of the powdered polyvinyl alcohol was used as the water absorptive resin. Also, copper powder (MF-D$_3$, average particle diameter: 13$\mu$) manufactured by Mitsui Kinsoku Kogyo Kabushiki Kaisha, silver powder (Silcoat Agc-B) manufactured by Fukuda Kinzoku Hakuhun Kogyo Kabushiki Kaisha and carbon black sold under a tradename "Donacarbo"® from Dai-Nippon Ink Kagaku Kogyo Kabushiki Kaisha were used. Further, acrylic resin was used as the paint ingredient.

Example 3

10 parts of powdered Gohsenol GM-14, 1 part of copper powder and 1 part of silver powder were dispersed in 30 parts of acrylic resin while mixing, to prepare the aquatic organism blocking material shown in Fig. 2(a).

Example 4

Two 10% aqueous Gohsenol GM-14® solutions were prepared. 1 part of copper powder was added to and mixed with 9 parts of one of the aqueous solutions and 1 part of silver powder was added to and mixed with 9 parts of the other aqueous solution, to thereby prepare mixtures. Then, each of the resultant mixtures was dried while stirring and then ground using a coffee mill and a ball mill. The ground mixtures each were then subjected to a screening treatment to obtain particles of 100$\mu$ or less in particle diameter. 10 parts of the respective particles were dispersed in 60 parts of acrylic resin while mixing, resulting in the aquatic organism blocking material of Fig. 2(c).

Example 5

A 10% aqueous Gohsenol GM-14® solution was prepared. 1 part of copper powder and 1 part of carbon black were added to and mixed with 18 parts of the aqueous solution to prepare a mixture. Then, the resultant mixture was dried while stirring and then ground using a coffee mill and a ball mill. The ground mixture was then subjected to a screening treatment to obtain particles of 100$\mu$ or less in particle diameter. 10 parts of the particles were dispersed in 30 parts of acrylic resin while mixing, resulting in the aquatic organism blocking material of Fig. 2(f).

Example 6

A 10% aqueous Gohsenol GM-14® solution was prepared. 1 part of copper powder and 1 part of silver powder were added to and mixed with 18 parts of the aqueous solution, to thereby obtain a mixture. Then, the resultant mixture was dried while stirring and then ground using a coffee mill and a ball mill. The ground mixture was then subject to a screening treatment to obtain particles of 100$\mu$ or less in particle diameter. 20 parts of the particles were dispersed in 30 parts of acrylic resin while mixing, resulting in the aquatic organism blocking material of Fig. 2(e).

Example 7

A 10% aqueous solution of polyvinyl alcohol sold under a tradename "Gohsenol KH-17"® from Nippon Gosei Kagaku Kabushiki Kaisha which has a degree of polymerization larger than Gosenol GM-14 was prepared. 1 part of copper powder and 1 part of silver powder were added to and mixed with 18 parts of the aqueous solution, and the resultant mixture was dried while stirring and then ground using a coffee mill and a ball mill. The ground mixture was subject to a screening treatment to obtain particle of 100$\mu$ or less in particle diameter. 20 parts of the particles were dispersed in 30 parts of acrylic resin while mixing, to thereby obtain the aquatic organism blocking material of Fig. 2(e).

In the following Examples 8 to 19, copper powder (MF-D$_3$, average particle diameter: 13$\mu$) manufactured by Mitsui Kinzoku Kogyo Kabushiki Kaisha and silver powder (Silcoat Agc-B) manufactured by Fukuda Kinzoku Hakuhun Kogyo Kabushiki Kaisha were used as metals different in ionization tendency. Also, carbon black sold under a tradename "Donacarbo" from Dai-Nippon Ink Kagaku Kogyo Kabushiki Kaisha was used. Further, as the water absorptive resin were used polyvinyl alcohols sold under tradenames "Gohsenol KH-17"® (degree of saponification: K, degree of polymerization: H) and "Gohsenol NL-05"® (degree of saponification: N, degree of polymerization: L) from Nippon Gosei Kagaku Kabushiki Kaisha.

Example 8

1 part of copper powder, 1 part of silver powder and 10 parts of Gohsenol KH-17® particles were mixed, and the resultant mixture was dispersed in 30 parts of acrylic resin while mixing, to thereby obtain the aquatic organism blocking material of the present invention.

12

Example 9

1 part of copper powder, 1 part of silver powder and 10 parts of Gohsenol NL-05® particles were mixed, and the resultant mixture was dispersed in 30 parts of acrylic resin while mixing, to thereby obtain the aquatic organism blocking material of the present invention.

Example 10

Two 10% aqueous Gohsenol KH-17 solutions were prepared. 1 part of copper powder and 1 part of silver powder were added to and mixed with 9 parts of the aqueous solutions separate from each other, respectively. Then, the resultant mixtures were dried while stirring and then ground using a coffee mill and a ball mill. The ground mixtures each were then subject to a screening treatment to obtain particles of $100\mu$ or less in particle diameter. 10 parts of the respective particles were dispersed together in 30 parts of acrylic resin while mixing, resulting in the aquatic organism blocking material of the present invention.

Example 11

Two 10% aqueous Gohsenol NL-05® solutions were prepared. 1 part of copper powder and 1 part of silver powder were added to and mixed with 9 parts of the aqueous solutions, respectively. Then, the resultant mixtures were dried while stirring and then ground using a coffee mill and a ball mill. The ground mixtures each were then subject to a screening treatment to obtain particles of $100\mu$ or less in particle diameter. 10 parts of the respective particles were dispersed together in 30 parts of acrylic resin while mixing, resulting in the aquatic organism blocking material of the present invention.

Example 12

A 10% aqueous Gohsenol KH-17® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subjected to a screening treatment to obtain particles of $100\mu$ or less in particle diameter. 20 parts of the particles were dispersed in 30 parts of acrylic resin while mixing, resulting in the aquatic organism blocking material according to the present invention.

Example 13

A 10% aqueous Gohsenol NL-05® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subjected to a screening treatment to obtain particles of $100\mu$ or less in particle diameter. 20 parts of the particles were dispersed in 30 parts of acrylic resin while mixing, resulting in the aquatic organism blocking material of the present invention.

Example 14

1 part of copper powder, 1 part of carbon black and 10 parts of Gohsenol KH-17® particles were mixed, and the resultant mixture was dispersed in 30 parts of acrylic resin while mixing, to thereby obtain the aquatic organism blocking material.

Example 15

1 part of copper powder, 1 part of carbon black and 10 parts of Gohsenol NL-05® particles were mixed, and the resultant mixture was dispersed in 30 parts of acrylic resin while mixing, to thereby obtain the aquatic organism blocking material.

Example 16

Two 10% aqueous Gohsenol KH-17® solutions were prepared. 1 part of copper powder and 1 part of carbon black powder were added to and mixed with 9 parts of the aqueous solutions, respectively. Then, the resultant mixtures were dried while stirring and then ground using a coffee mill and a ball mill. The ground mixtures each were then subject to a screening treatment to obtain particles of 100$\mu$ or less in particle diameter. 10 parts of the respective particles were dispersed together in 30 parts of acrylic resin while mixing, resulting in the aquatic organism blocking material.

Example 17

Two 10% aqueous Gohsenol NL-05® solutions were prepared. 1 part of copper powder and 1 part of carbon black were added to and mixed with 9 parts of the aqueous solutions, respectively. Then, the resultant mixtures were dried while stirring and then ground using a coffee mill and a ball mill. The ground mixtures each were then subject to a screening treatment to obtain particles of 100$\mu$ or less in particle diameter. 10 parts of the respective particles were dispersed together in 30 parts of acrylic resin while mixing, resulting in the aquatic organism blocking material.

Example 18

A 10% aqueous Gohsenol KH-17® solution was prepared. 1 part of copper powder and 1 part of carbon black were added to and mixed with 18 parts of the aqueous solution. Then, the resultant mixture was dried while stirring and then ground using a coffee mill and a ball mill. The ground mixture was then subjected to a screening treatment to obtain particles of 100$\mu$ or less in particle diameter. 20 parts of the particles were dispersed in 30 parts of acrylic resin while mixing, resulting in the aquatic organism blocking material.

Example 19

A 10% aqueous Gohsenol NL-05® solution was prepared. 1 part of copper powder and 1 part of carbon black were added to and mixed with 18 parts of the aqueous solution. Then, the resultant mixture was dried while stirring and then ground using a coffee mill and a ball mill. The ground mixture was then subjected to a screening treatment to obtain particles of 100$\mu$ or less in particle diameter. 20 parts of the particles were dispersed in 30 parts of acrylic resin while mixing, resulting in the aquatic organism blocking material.

In the following Examples 20 to 25, copper powder (MF-D$_3$, average particle diameter: 13$\mu$) manufactured by Mitsui Kinzoku Kogyo Kabushiki Kaisha and silver powder (Silcoat Agc-B) manufactured by Fukuda Kinzoku Hakuhun Kogyo Kabushiki Kaisha were used as the metals different in ionization tendency. Also, carbon black sold under a tradename "Donacarbo"® from Dai-Nippon Ink Kagaku Kogyo Kabushiki Kaisha was used. Further, as the water absorptive resin were used polyvinyl alcohol sold under a tradename "Gohsenol GM-14"® (degree of saponification: G, degree of polymerization: M) from Nippon Gosei Kagaku Kabushiki Kaisha in Examples 20 to 23, polyvinyl alcohol sold under a tradename "Gohsenol KH-17"® (degree of saponification: K, degree of polymerization: H) from Nippon Gosei Kagaku Kabushiki Kaisha in Example 24 and polyvinyl alcohol sold under a tradename "Gohsenol NL-05"® (degree of saponlfication: N, degree of polymerization: L) from Nippon Gosei Kagaku Kabushiki Kaisha in Example 25, respectively.

Example 20

Two 10% aqueous Gohsenol GM-14® solutions were prepared. 1 part of copper powder was added to and mixed with 9 parts of one of the aqueous solutions and 1 part of silver powder was added to and mixed with 9 parts of the other aqueous solution. Then, each of the resultant mixtures was dried while stirring and then ground using a coffee mill and a ball mill. The ground mixtures each were then subjected to a screening treatment to obtain particles of 100$\mu$ or less in particle diameter, resulting in the aquatic organism blocking material.

Example 21

Two 10% aqueous Gohsenol GM-14® solutions were prepared. 1 part of copper powder was added to and mixed with 9 parts of one of the aqueous solutions and 1 part of silver powder was added to and mixed with 9 parts of the other aqueous solution. Then, each of the resultant mixtures was dried while stirring and then ground using a coffee mill and a ball mill. The ground mixtures each were then subjected to a screening treatment to obtain particles of 100$\mu$ or less in particle diameter, resulting in the aquatic organism blocking material.

14

Example 22

A 10% aqueous Gohsenol GM-14® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subject to a screening treatment to obtain particles of 100$\mu$ or less in particle diameter, resulting in the aquatic organism blocking material.

Example 23

A 10% aqueous Gohsenol GM-14® solution was prepared. 1 part of copper powder and 1 part of carbon black were added to and mixed with 18 parts of the aqueous solution. Then, the resultant mixture was dried while stirring and then ground using a coffee mill and a ball mill. The ground mixture was then subject to a screening treatment to obtain particles of 100$\mu$ or less in particle diameter, resulting in the aquatic organism blocking material.

Example 24

A 10% aqueous Gohsenol KH-17® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subjected to a screening treatment to obtain particles of 100$\mu$ or less in particle diameter, resulting in the aquatic organism blocking material.

Example 25

A 10% aqueous Gohsenol NL-05® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subjected to a screening treatment to obtain particles of 100$\mu$ or less in particle diameter, resulting in the aquatic organism blocking material.

In the following Examples 26 to 33, copper powder (MF-D$_3$, average particle diameter: 13$\mu$) manufactured by Mitsui Kinzoku Kogyo Kabushiki Kaisha and silver powder (Silcoat Agc-B) manufactured by Fukuda Kinzoku Hakuhun Kogyo Kabushiki Kaisha were used as the metals different in ionization tendency. Also, carbon black sold under a tradename "Donacarbo"® from Dai-Nippon Ink Kagaku Kogyo Kabushiki Kaisha was used. Further, as the water absorptive resin were used polyvinyl alcohol sold under a tradename "Gohsenol GM-14"® (degree of saponification: G, degree of polymerization: M) from Nippon Gosei Kagaku Kabushiki Kaisha in Examples 26 to 31, polyvinyl alcohol sold under a tradename "Gohsenol KH-17"® (degree of saponification: K, degree of polymerization: H) from Nippon Gosei Kagaku Kabushiki Kaisha in Example 32 and polyvinyl alcohol sold under a tradename "Gohsenol NL-05"® (degree of saponification: N, degree of polymerization: L) from Nippon Gosei Kagaku Kabushiki Kaisha in Example 33.

Example 26

1 part of copper powder, 1 part of silver powder and 10 parts of Gohsenol GM-14® powder were kneaded in 100 parts of molten nylon 6 and formed into pellets of a predetermined shape. Then, the pellets were subject to an extruding treatment at a temperature of about 200 to 220°C, and the resultant extrudate was cooled and then heated again to a temperature of about 100°C. Then, it is subjected to a stretching treatment, resulting in obtaining the aquatic organism blocking material.

Example 27

1 part of copper powder, 1 part of carbon black and 10 parts of Gohsenol GM-14® powder were kneaded in 100 parts of molten nylon 6 and formed into pellets of a predetermined shape. Then, the pellets were subject to an extruding treatment at a temperature of about 200 to 220°C, and the resultant extrudate was cooled and then heated again to a temperature of about 100°C. Then, it is subjected to a stretching treatment, resulting in providing the aquatic organism blocking material.

Example 28

Two 10% aqueous Gohsenol GM-14® solutions were prepared. 1 part of copper powder was added to and mixed with 9 parts of one of the aqueous solutions and 1 part of silver powder was added to and mixed with 9 parts of the other aqueous solution. Then, each of the resultant mixtures was dried while stirring and then ground using a coffee mill and a ball mill. The ground mixtures each were then subjected to a screening treatment to obtain particles of 100µ or less in particle diameter. 20 parts of the respective particles were put in and kneaded with 100 parts of molten nylon 6 and formed into pellets of a predetermined shape. Subsequently, the pellets were subject to an extruding treatment at a temperature of about 200 to 220°C, and the resultant extrudate was cooled and then heated again to a temperature of about 100°C. Then, it was subjected to a stretching treatment, resulting in providing the aquatic organism blocking material.

Example 29

Two 10% aqueous Gohsenol GM-14® solutions were prepared. 1 part of copper powder was added to and mixed with 9 parts of one of the aqueous solutions and 1 part of carbon black was added to and mixed with 9 parts of the other aqueous solution. Then, each of the resultant mixtures was dried while stirring and then ground using a coffee mill and a ball mill. The ground mixtures each were then subjected to a screening treatment to obtain particles of 100µ or less in particle diameter. 20 parts of the respective particles were put in and kneaded with 100 parts of molten nylon 6 and formed into pellets of a predetermined shape. Subsequently, the pellets were subject to an extruding treatment at a temperature of about 200 to 220°C, and the resultant extrudate was cooled and then heated again to a temperature of about 100°C. Then, it was subjected to a stretching treatment, resulting in providing the aquatic organism blocking material.

Example 30

A 10% aqueous Gohsenol GM-14® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subjected to a screening treatment to obtain particles of 100µ or less in particle diameter. 20 parts of the particles were put in and kneaded with 100 parts of molten nylon 6 and formed into pellets of a predetermined shape. Subsequently, the pellets were subjected to an extruding treatment at a temperature of about 200 to 220°C, and the resultant extrudate was cooled and then heated again to a temperature of about 100°C. Then, it was subjected to a stretching treatment, resulting in providing the aquatic organism blocking material.

Example 31

A 10% aqueous Gohsenol GM-14® solution was prepared. 1 part of copper powder and 1 part of carbon black were added to and mixed with 18 parts of the aqueous solution. Then, the resultant mixture was dried while stirring and then ground using a coffee mill and a ball mill. The ground mixture was then subjected to a screening treatment to obtain particles of 100µ or less in particle diameter. 20 parts of the particles were put in and kneaded with 100 parts of molten nylon 6 and formed into pellets of a predetermined shape. Subsequently, the pellets were subject to an extruding treatment at a temperature of about 200 to 220°C, and the resultant extrudate was cooled and then heated again to a temperature of about 100°C. Then, it was subjected to a stretching treatment, resulting in providing the aquatic organism blocking material.

Example 32

A 10% aqueous Gohsenol KH-17® solution was prepared. 1 part of copper powder and 1 part of silver powder were added to and mixed with 18 parts of the aqueous solution. Then, the resultant mixture was dried while stirring and then ground using a coffee mill and a ball mill. The ground mixture was then subjected to a screening treatment to obtain particles of 100µ or less in particle diameter. 20 parts of the particles were put in and kneaded with 100 parts of molten nylon 6 and formed into pellets of a predetermined shape. Subsequently, the pellets were subjected to an extruding treatment at a temperature of about 200 to 220°C, and the resultant extrudate was cooled and then heated again to a temperature of about 100°C. Then, it was subjected to a stretching treatment, resulting in providing the aquatic organism blocking material.

Example 33

A 10% aqueous Gohsenol KH-17® solution was prepared. 1 part of copper powder and 1 part of carbon black were added to and mixed with 18 parts of the aqueous solution. Then, the resultant mixture was dried while stirring and then ground using a coffee mill and a ball mill. The ground mixture was then subjected to a screening treatment to obtain particles of 100μ or less in particle diameter. 20 parts of the particles were put in and kneaded with 100 parts of molten nylon 6 and formed into pellets of a predetermined shape. Subsequently, the pellets were subjected to an extruding treatment at a temperature of about 200 to 220°C, and the resultant extrudate was cooled and then heated again to a temperature of about 100°C. Then, it was subjected to a stretching treatment, resulting in providing the aquatic organism blocking material.

Example 34

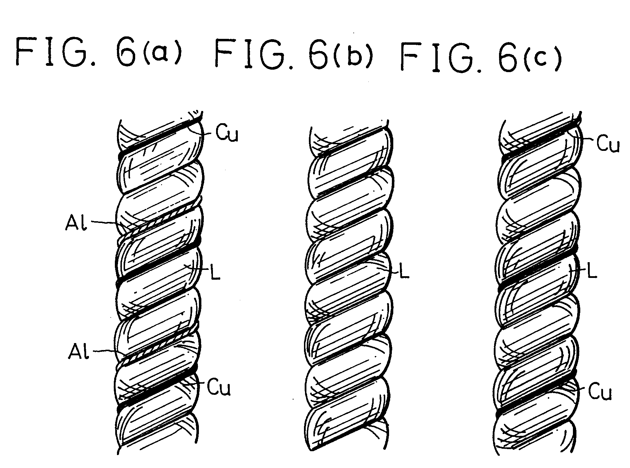

Clemona Rope L made of cotton and formed into a diameter of 10mm was selected as an implement used in a water area. An aluminum fiber Al of about 1mm in diameter and a copper fiber Cu of about 1mm in diameter were wound around the rope so as to be spaced at an interval of 5mm from each other, as shown in Fig. 6(a), resulting in the aquatic organism blocking material. For comparison, the rope L which has no metal fibers wound thereon and and the rope L which has only the copper fiber Cu wound thereon were prepared. The aluminum fiber Al and copper fiber Cu each were produced by twisting 5 to 10 fibrins of 45μm in length and width prepared by cutting an end surface of a cylinder obtained by forming a thin strip-like metal foil into a roll-like shape.

The aquatic organism blocking materials obtained in Examples 1 to 34 each were subjected to a test for confirming its aquatic organism blocking action. A plate test, a beaker test, an alga adhesion test and a marine test were carried out on each of the materials obtained in Examples 1 to 7, and only the marine test was carried out on the material obtained in each of Examples 8 to 34.

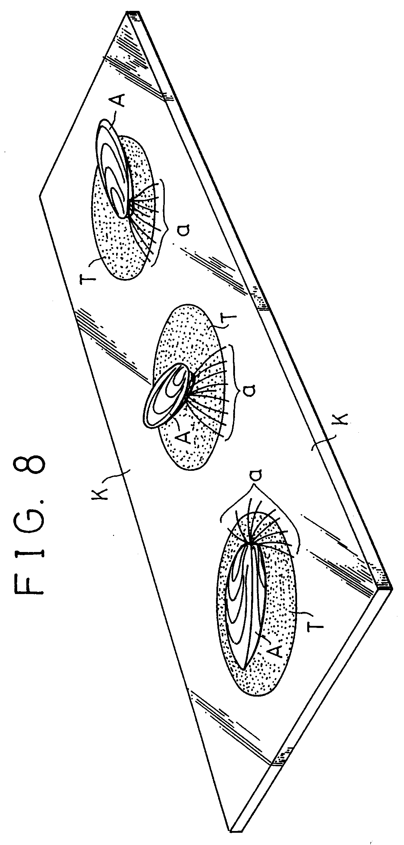

The plate test took place in such a manner as shown in Fig. 8. More particularly, three circular patterns (diameter: 5cm) of the aquatic organism blocking material T of the present invention were applied to a polyester FRP base plate and Soletellina diphos A having a shell length of 3cm was horizontally fixed on a central portion of each of the patterns to observe adhesion of a byssus a of the shellfish to the base plate. The reason that Soletellina diphos was used in the test is that Soletellina diphos, as well as a barnacle, is an aquatic organism typically used for such an aquatic organism adhesion test and tends to readily adhere to marine facilities. Soletellina diphos was fixed on the central portion of each of the circular patterns of the material T through a rubber piece of 1.2mm in thickness by means of a flash adhesive. The base plate was placed in a seawater tank or aquarium for one week to observe adhesion of the byssus to the base plate.

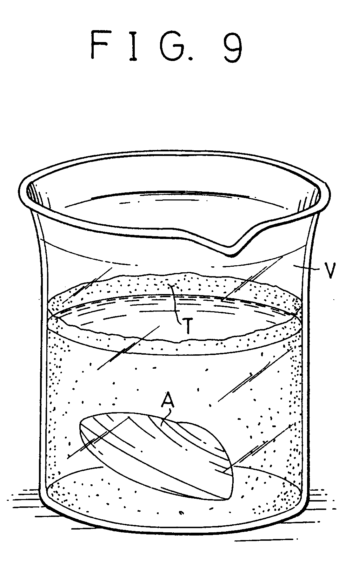

The beaker test took place as shown in Fig. 9. The aquatic organism blocking material T was coated on inner peripheral and inner bottom surfaces of a beaker V, which was then filled with seawater. Then, Soletellina diphos was placed on the bottom of the beaker to observe adhesion of its byssus to the beaker. The beaker test was carried out for complementing the plate test and has significance in that adhesion of Soletellina diphos is observed under realistic conditions of keeping Soletellina diphos free.

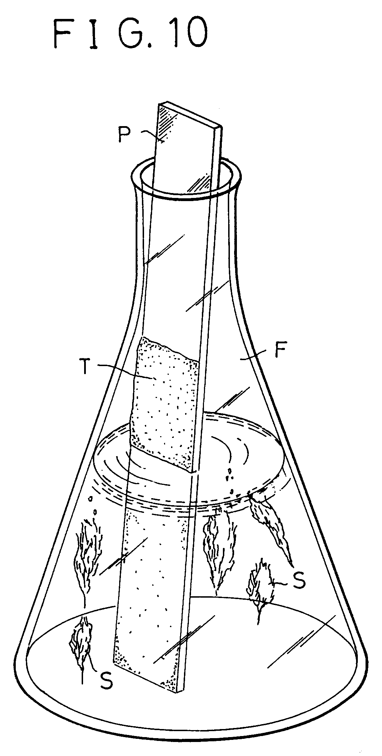

The algae adhesion test, as shown in Fig. 10, took place by applying the aquatic organism blocking material T to a FRP plate P having dimensions of 15mm x 100mm x 1.5mm and then placing the plate P together with algae S in a flask F filled with seawater for one month or more, to thereby observe adhesion of the algae to the plate P. Shellfish and the like adhering to a ship bottom breed with adhesion of spores thereof to the ship bottom as a momentum. The spores tend to readily adhere to a ship bottom when algae already adhere thereto; whereas when algae are hard to adhere to a ship bottom, the spores fail to adhere thereto to render breeding of shellfish and the like hard. The alga adhesion test has significance in this respect.

The marine test was carried out by submerging a test plate coated with the aquatic organism blocking material in the sea for a predetermined period of time to observe adhesion of aquatic organisms to the plate.

The number of samples for the tests was six in the plate test, four in the beaker test and two in the algae adhesion test.

In the marine test on each of Examples 20 to 25, 20 parts of the aquatic organism blocking material of each embodiment and 30 parts of an acrylic resin paint were kneaded and applied to the test plate. Also, 20 parts of the material of each embodiment were kneaded in 100 parts of nylon 6 and then formed into pellets of a predetermined shape. Subsequently, the pellets were passed through an extruder at a temperature of about 200 to 220 °C while being kept molten, cooled and then heated again to a temperature about 100 °C, followed by being subjected to a stretching treatment to form fibers. 60 such fibers were twisted to provide a rope.

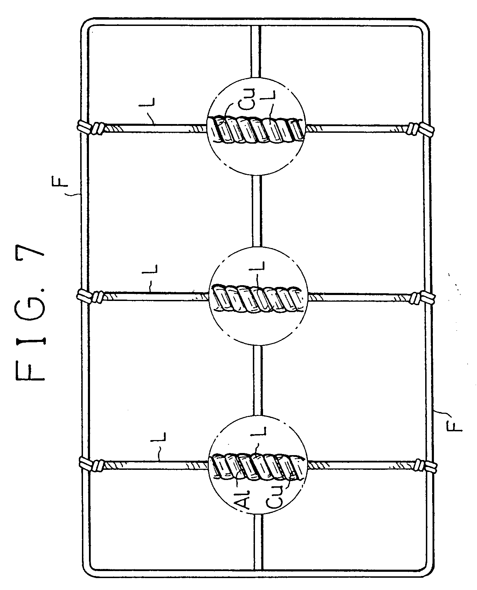

Also, in the marine test on each of Examples 26 to 33, the aquatic organism blocking material of each example in the form of aquatic organism blocking fibers was subjected to a corona discharge treatment in an ozone atmosphere, resulting in its surface being roughened. 60 such fibers thus treated were twisted together to produce a rope. Then, the rope was cut into a size of 50cm x 50cm. Further, in the marine test on Example 34, the rope of each of Figs. 6(a), 6(b) and 6(c) was cut into a length of 500mm and then wound on a frame F as shown in Fig. 7.

Results of the tests were as shown in Tables 2 to 6.

Table 2

| Example | Plate Test | Beaker Test | Algae Adhesion Test |
|---|---|---|---|
| 1 | 3 individuals die. 2 individuals fail to put out byssi. 1 individual puts byssus on shell. | 1 individual dies. 3 individuals fail to put out byssi. | Algae in flask die. No adhesion of algae. |
| 2 | 5 individuals die. 1 individual fails to put out byssus. | All 4 individuals die. | No adhesion of algae. |
| 3 | 3 individuals die. 2 individuals fail to put out byssi. 1 individual puts byssus on shell. | 1 individual dies. 3 individuals fail to put out byssi. | Adhesion of slime after one month. |
| 4 | 3 individuals die. 3 individuals fail to put out byssi. | All 4 individuals die. | Adhesion of slime after one month. |
| 5 | 2 individuals die. 4 individuals fail to put out byssi. | All 4 individuals die. | Adhesion of slime after one month. |
| 6 | 1 individual dies. 5 individuals fail to put out byssi. | All 4 individuals die. | Adhesion of slime after one month. |
| 7 | All 6 individuals die. | All 4 individuals die. | Some adhesion of slime. |

Table 3

| Example | 10 Days | 20 Days | 30 Days | 50 Days | 70 Days | 90 Days |
|---|---|---|---|---|---|---|
| Blank | No Adhesion | Adhesion | Adhesion | Adhesion | Adhesion | Adhesion |
| 8 | No Adhesion | No Adhesion | No Adhesion | Adhesion | Adhesion | Adhesion |
| 9 | No Adhesion | No Adhesion | Adhesion | Adhesion | Adhesion | Adhesion |
| 10 | No Adhesion | No Adhesion | No Adhesion | No Adhesion | No Adhesion | Adhesion |
| 11 | No Adhesion | No Adhesion | No Adhesion | No Adhesion | No Adhesion | Adhesion |
| 12 | No Adhesion | No Adhesion | No Adhesion | No Adhesion | No Adhesion | No Adhesion |
| 13 | No Adhesion | No Adhesion | No Adhesion | No Adhesion | No Adhesion | No Adhesion |
| 14 | No Adhesion | No Adhesion | adhesion | Adhesion | Adhesion | Adhesion |
| 15 | No Adhesion | No Adhesion | No Adhesion | Adhesion | Adhesion | Adhesion |
| 16 | No Adhesion | No Adhesion | No Adhesion | No Adhesion | No Adhesion | Adhesion |
| 17 | No Adhesion | No Adhesion | No Adhesion | No Adhesion | No Adhesion | Adhesion |
| 18 | No Adhesion | No Adhesion | No Adhesion | No Adhesion | No Adhesion | No Adhesion |
| 19 | No Adhesion | No Adhesion | No Adhesion | No Adhesion | No Adhesion | No Adhesion |

Table 4

| (Kneaded in Paint) | | | | | | |
|---|---|---|---|---|---|---|
| Example | 10 Days | 20 Days | 30 Days | 50 Days | 70 Days | 90 Days |
| Blank | No Adhesion | Adhesion | Adhesion | Adhesion | Adhesion | Adhesion |
| 20 | No Adhesion | No Adhesion | No Adhesion | No Adhesion | Adhesion | Adhesion |
| 21 | No Adhesion | No Adhesion | No Adhesion | Adhesion | Adhesion | Adhesion |
| 22 | No Adhesion | No Adhesion | No Adhesion | No Adhesion | No Adhesion | No Adhesion |
| 23 | No Adhesion | No Adhesion | No Adhesion | No Adhesion | Adhesion | Adhesion |
| 24 | No Adhesion | No Adhesion | No Adhesion | No Adhesion | No Adhesion | No Adhesion |
| 25 | No Adhesion | No Adhesion | No Adhesion | No Adhesion | No Adhesion | No Adhesion |

Table 5

| (Contained in Fibers) | | | | | | |
|---|---|---|---|---|---|---|
| Example | 10 Days | 20 Days | 30 Days | 40 Days | 50 Days | 60 Days |
| Blank | Adhesion | Adhesion | Adhesion | Adhesion | Adhesion | Adhesion |
| 20 | No Adhesion | No Adhesion | No Adhesion | No Adhesion | Adhesion | Adhesion |
| 21 | No Adhesion | No Adhesion | No Adhesion | No Adhesion | Adhesion | Adhesion |
| 22 | No Adhesion | No Adhesion | No Adhesion | No Adhesion | No Adhesion | Adhesion |
| 23 | No Adhesion | No Adhesion | No Adhesion | No Adhesion | Adhesion | Adhesion |
| 24 | No Adhesion | No Adhesion | No Adhesion | No Adhesion | No Adhesion | No Adhesion |
| 25 | No Adhesion | No Adhesion | No Adhesion | No Adhesion | No Adhesion | No Adhesion |

EP 0 506 470 B1

Table 6

| Example | 10 Days | 20 Days | 30 Days | 40 Days | 50 Days | 60 Days |
|---|---|---|---|---|---|---|
| Blank | Adhesion | Adhesion | Adhesion | Adhesion | Adhesion | Adhesion |
| 26 | No Adhesion | No Adhesion | Adhesion | Adhesion | Adhesion | Adhesion |
| 27 | No Adhesion | No Adhesion | Adhesion | Adhesion | Adhesion | Adhesion |
| 28 | No Adhesion | No Adhesion | No Adhesion | No Adhesion | Adhesion | Adhesion |
| 29 | No Adhesion | No Adhesion | No Adhesion | No Adhesion | Adhesion | Adhesion |
| 30 | No Adhesion | No Adhesion | No Adhesion | No Adhesion | No Adhesion | Adhesion |
| 31 | No Adhesion | No Adhesion | No Adhesion | No Adhesion | Adhesion | Adhesion |
| 32 | No Adhesion | No Adhesion | No Adhesion | No Adhesion | No Adhesion | No Adhesion |
| 33 | No Adhesion | No Adhesion | No Adhesion | No Adhesion | No Adhesion | No Adhesion |

Also, in the test on Example 34, a large amount of algae adhered to the rope which does not have any metal fibers wound thereon, and a relatively large amount of algae adhered to the rope on which only the copper fiber Cu is wound. On the contrary, adhesion of algae to the rope on which both aluminum fiber Al and copper fiber Cu are wound was substantially less.

As can be seen from the above-described results of the tests on the examples, the aquatic organism blocking material of each of Examples 1 and 2 effectively prevents adhesion of the byssus of Soletellina diphos in each of the plate test and beaker test. Also, the alga adhesion test indicated that the material of each of the examples effectively prevents adhesion of algae. In particular, the material of Example 1 led to death of algae. Further, the marine test revealed that the aquatic organism blocking material of each of Examples 1 and 2 fully prevents adhesion of any aquatic organism.

In connection with the aquatic organism blocking material of each of Examples 3 to 7 which contains copper, silver or carbon black, and water absorptive resin, both plate test and beaker test indicated that it effectively prevents adhesion of the byssus of Soletellina diphos. The algae adhesion test indicated that the material of each of Examples 3 to 7 leads to adhesion of slime, however, it was found that this is substantially insufficient to cause spores of shellfish or the like to adhere to a ship bottom. It was observed that the aquatic organism blocking material of Example 7 fully blocks adhesion of algae.

In addition, it was revealed that the aquatic organism blocking material of each of Examples 8 to 19 significantly delays adhesion of algae as compared with the blank coated with conventional acrylic resin and adjustment of degrees of saponification and polymerization of polyvinyl alcohol permits a life of the material to be adjusted as desired.

Also, the aquatic organism blocking material of each of Examples 20 to 25 exhibited an aquatic organism blocking action sufficient to delay adhesion of algae as compared with the blank coated with a paint free of any aquatic organism blocking pigment and a rope fibers free of any blocking pigment.

Further, the aquatic organism blocking materials of Examples 26 to 33 delayed adhesion of algae as compared with the blank.

Moreover, the test on the aquatic organism blocking material of Example 34 indicated that application of the present invention to an aquatic implement blocks adhesion of aquatic organisms thereto.

It is known that shellfish and the like adhering to aquatic implements or facilities breed with adhesion of their spores thereto as a momentum. The spores tend to readily adhere to the implements or facilities when algae already adhere thereto; whereas when algae are hard to adhere to a ship bottom, the spores fail to adhere thereto to render breeding of shellfish and the like hard. The test results described above clearly indicate that the aquatic organism blocking material of the present invention satisfactorily exhibits an action of positively blocking adhesion of aquatic organisms to aquatic and fishing implements and facilities.

## Claims

1. An aquatic organism blocking material comprising at least two substances capable of forming an electrode system in the presence of an electrolyte and at least one water absorptive resin, said substances optionally being carried by said water absorptive resin.

2. An aquatic organism blocking material as defined in claim 1 incorporated into a part of a pigment.

3. An aquatic organism blocking material as defined in claim 2, wherein said pigment constitutes a part of a paint.

20

4. An aquatic organism blocking material as defined in any preceding claim, wherein said substances and said water absorptive resin are present independently from one another.

5. An aquatic organism blocking material as defined in any preceding claim, wherein said substances are carried on different water absorptive resins.

6. An aquatic organism blocking material as defined in any of claims 1-4 , wherein said substances are carried together on the same water absorptive resin.

7. An aquatic organism blocking material as defined in claim 6 , wherein said water absorptive resin comprises polyvinyl alcohol.

8. An aquatic organism blocking material as defined in claim 7, wherein said polyvinyl alcohol has a degree of saponification of 98.5 mol% or more and a degree of polymerization of 1000 or less.

9. An aquatic organism blocking material as defined in claim 7, wherein said Polyvinyl alcohol has a degree of saponification between 78.5 mol% and 81.5 mol% and a degree of polymerization of 1500 or more.

10. An aquatic organism blocking material as defined in any preceding claim wherein said substances comprise at least two metals different in ionization potential.

11. An aquatic organism blocking material as defined in claim 10 wherein said metals comprise copper and silver.

12. An aquatic organism blocking material as defined in any one of claims 1 to 9 wherein said substances comprise copper and carbon black.

13. A method for preventing the attachment of an aquatic organism to a surface comprising the application to said surface of an aquatic organism blocking material as claimed in any preceding claim.

14. Use of a composition as claimed in any one of claims 1 to 12 as an aquatic organism blocking material.

**Patentansprüche**

1. Wasserorganismen blockierendes Material, bestehend aus wenigstens zwei Substanzen, die in der Lage sind, ein Elektrodensystem in Gegenwart eines Elektrolyten zu bilden, und wenigstens einem wasserabsorptionsfähigen Harz, wobei die Substanzen gegebenenfalls durch das wasserabsorptionsfähige Harz getragen werden.

2. Wasserorganismen blockierendes Material nach Anspruch 1, aufgenommen in einem Teil eines Pigmentes.

3. Wasserorganismen blockierendes Material nach Anspruch 2, worin das Pigment einen Teil einer Farbe bildet.

4. Wasserorganismen blockierendes Material nach einem der vorangegangenen Ansprüche, worin die Substanzen und das wasserabsorptionsfähige Harz unabhängig voneinander vorhanden sind.

5. Wasserorganismen blockierendes Material nach einem der vorangegangenen Ansprüche, worin die Substanzen auf unterschiedlichen wasserabsorptionsfähigen Harzen getragen werden.

6. Wasserorganismen blockierendes Material nach einem der Ansprüche 1 bis 4, worin die Substanzen zusammen auf dem gleichen wasserabsorptionsfähigen Harz getragen werden.

7. Wasserorganismen blockierendes Material nach Anspruch 6, worin das wasserabsorptionsfähige Harz Polyvinylalkohol umfaßt.

8. Wasserorganismen blockierendes Material nach Anspruch 7, worin der Polyvinylalkohol einen Verseifungsgrad von 98,5 Mol% oder mehr und einen Polymerisationsgrad von 1000 oder weniger hat.

9. Wasserorganismen blockierendes Material nach Anspruch 7, worin der Polyvinylalkohol einen Verseifungsgrad zwischen 78,5 Mol% und 81,5 Mol% und einen Polymerisationsgrad von 1500 oder mehr hat.

10. Wasserorganismen blockierendes Material nach einem der vorangegangenen Ansprüche, worin die Substanzen wenigstens zwei Metalle umfassen, die sich in ihrem Ionisationspotential unterscheiden.

11. Wasserorganismen blockierendes Material nach Anspruch 10, worin die Metalle Kupfer und Silber umfassen.

12. Wasserorganismen blockierendes Material nach einem der Ansprüche 1 bis 9, worin die Substanzen Kupfer und Ruß umfassen.

13. Verfahren zur Verhinderung der Haftung eines Wasserorganismus an einer Oberfläche, gekennzeichnet durch das Aufbringen eines Wasserorganismen blockierenden Materials nach einem der vorangegangenen Ansprüche auf die Oberfläche.

14. Verwendung einer Zusammensetzung nach einem der Ansprüche 1 bis 12 als ein Wasserorganismen blockierendes Material.

**Revendications**

1. Matériau permettant de bloquer des organismes aquatiques comprenant au moins deux substances capables de former un système d'électrodes en présence d'un électrolyte et au moins une résine absorbeuse d'eau, lesdites substances étant éventuellement supportées par ladite résine absorbeuse d'eau.

2. Matériau permettant de bloquer des organismes aquatiques selon la revendication 1 incorporé dans une partie d'un pigment.

3. Matériau permettant de bloquer des organismes aquatiques selon la revendication 2, dans lequel ledit pigment constitue une partie d'une peinture.

4. Matériau permettant de bloquer des organismes aquatiques selon l'une quelconque des revendications précédentes, dans lequel lesdites substances et ladite résine absorbeuse d'eau sont présentes indépendamment les unes des autres.

5. Matériau permettant de bloquer des organismes aquatiques selon l'une quelconque des revendications précédentes, dans lequel lesdites substances sont supportées par des résines absorbeuses d'eau différentes.

6. Matériau permettant de bloquer des organismes aquatiques selon l'une quelconque des revendications 1 à 4, dans lequel lesdites substances sont supportées ensemble sur la même résine absorbeuse d'eau.

7. Matériau permettant de bloquer des organismes aquatiques selon la revendication 6, dans lequel ladite résine absorbeuse d'eau comprend un poly(alcool vinylique).

8. Matériau permettant de bloquer des organismes aquatiques selon la revendication 7, dans lequel ledit poly(alcool vinylique) a un degré de saponification de 98,5 % en mole ou plus et un degré de polymérisation de 1000 ou moins.

9. Matériau permettant de bloquer des organismes aquatiques selon la revendication 7, dans lequel ledit poly(alcool vinylique) a un degré de saponification entre 78,5 % en mole et 81,5 % en mole et un degré de polymérisation de 1500 ou plus.

**10.** Matériau permettant de bloquer des organismes aquatiques selon l'une quelconque des revendications précédentes, dans lequel lesdites substances comprennent au moins deux métaux de potentiel d'ionisation différents.

**11.** Matériau permettant de bloquer des organismes aquatiques selon la revendication 10, dans lequel lesdits métaux comprennent le cuivre et l'argent.

**12.** Matériau permettant de bloquer des organismes aquatiques selon l'une quelconque des revendications 1 à 9, dans lequel lesdites substances comprennent le cuivre et le noir de carbone.

**13.** Procédé pour empêcher un organisme aquatique de s'attacher à une surface, comprenant l'application sur ladite surface d'un matériau neutralisant des organismes aquatiques selon l'une quelconque des revendications précédentes.

**14.** Utilisation d'une composition selon l'une quelconque des revendications 1 à 12 en tant que matériau permettant de bloquer des organismes aquatiques.

# FIG. 1

# FIG. 2(a)

# FIG.2(b)

# FIG. 2(c)

# FIG. 2(d)

# FIG. 2(e)

# FIG. 2(f)

# FIG. 3(a)  FIG. 3(b)

# FIG. 3(c)  FIG. 3(d)

# FIG. 3(e)  FIG. 3(f)

FIG. 4(a)

FIG.4(b)  FIG. 4(c)

27

FIG. 5(a)

FIG. 5(b)

FIG. 5(c)

# FIG. 6(a)  FIG. 6(b)  FIG. 6(c)

F I G. 7

EP 0 506 470 B1

FIG. 8

EP 0 506 470 B1

# F I G. 9

# FIG. 10